# EUROPEAN PATENT APPLICATION

(11) **EP 3 124 756 A1**
(43) Date of publication of application: **01.02.2017**
(21) Application number: 16177642.2
(22) Date of filing: 01.07.2016
(51) Int. Cl.: F01D 25/20, F02C 7/36

(54) **FAN-DRIVE GEARED SYSTEM WITH SEPARATE SCAVENGE PUMP**

(30) Priority: 02.07.2015 US 201514790896
(71) Applicant: United Technologies Corporation, Farmington, CT 06032 (US)
(72) Inventor: DOLMAN, Paul H., Simsbury, CT Connecticut 06070 (US)
(74) Representative: Leckey, David Herbert

(57) **Abstract**

A lubrication circulation system may comprise a first oil pump (134;164) configured to retrieve oil from a bearing compartment (138,140;168,170), and a second oil pump (132;162) located separately from the first oil pump (134;164) and configured to retrieve the oil from a fan-drive gear system compartment (136;166). The first oil pump (134;164) may be configured to provide the oil to the bearing compartment (138,140;168,170) and the fan-drive gear system compartment (136;166).

## Description

### FIELD OF INVENTION

The present disclosure relates to gas turbine engines, and, more specifically, to a lubrication circulation system with separate fan-drive oil pump.

### Background

Geared turbofan engines may use journal bearings and rotating gears in the gear systems. Journal bearings operate using a film of oil. Gears also rely on lubrication to limit wear. As a result, geared turbofan engines use larger oil systems than direct-drive turbofan engines. The oil system for the geared engine may be twice the size of the oil system for a direct drive system. A larger lubrication circulation system may result in a higher weight and greater space consumption. As gas turbine engines get larger, the oil systems for the engines also tend to get larger. Packaging the larger oil systems may present difficulties with large lubrication and scavenge pumps and fan-drive compartment scavenge lines with large diameters and lengths.

### SUMMARY

A lubrication circulation system may comprise a first oil pump configured to retrieve oil from a bearing compartment, and a second oil pump configured to retrieve the oil from a fan-drive gear system compartment. The first oil pump may be configured to provide the oil to the bearing compartment and the fan-drive gear system compartment.

In various embodiments, an epicyclic gear system may be located in the fan-drive gear system compartment with the second oil pump is configured to retrieve the oil from the epicyclic gear system. The second oil pump may be located in the fan-drive gear system compartment. A scavenge line may be fluidly coupled to the fan-drive gear system compartment and the second oil pump. The scavenge line may comprise a diameter less than 2 inches. The second oil pump and the first oil pump urge the oil to an oil tank. The first oil pump is configured to pump the oil from the oil tank into the bearing compartment and the fan-drive gear system compartment. The second oil pump may be located closer to the fan-drive gear system compartment than the first oil pump.

A gas turbine engine may comprise an epicyclic gear system and a fan mechanically coupled to the epicyclic gear system and configured to rotate about an axis. A compressor may be aft of the fan and mechanically coupled to the fan and also include a bearing compartment. A first oil pump may be configured to provide oil to the bearing compartment. A second oil pump may be configured to retrieve the oil from the epicyclic gear system while located in a compartment separate from the first oil pump. A fan-drive gear system compartment may contain the epicyclic gear system. The second oil pump may be located in the fan-drive gear system compartment. A scavenge line may be fluidly coupled to the epicyclic gear system and the second oil pump. The scavenge line may comprise a diameter less than 2 inches (5.08 cm). The second oil pump and the first oil pump urge the oil to an oil tank. The first oil pump may also be configured to pump the oil from the oil tank into the bearing compartment and the epicyclic gear system. The second oil pump may be located closer to the epicyclic gear system than the first oil pump.

A lubrication circulation system may also comprise a first oil pump configured to retrieve oil from a bearing compartment. A second oil pump may be configured to retrieve the oil from a fan-drive gear system compartment, and the first oil pump may be configured to provide the oil to the bearing compartment and the fan-drive gear system compartment. An epicyclic gear system may be located in the fan-drive gear system compartment. The second oil pump may be configured to retrieve the oil from the epicyclic gear system. A scavenge line may be fluidly coupled to the fan-drive gear system compartment and the second oil pump.

In various embodiments, the second oil pump may be located in the fan-drive gear system compartment. The second oil pump may be located closer to the fan-drive gear system compartment than the first oil pump. The scavenge line may comprise a diameter less than 2 inches (5.08 cm).

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and nonlimiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates an exemplary gas turbine engine, in accordance with various embodiments;
FIG. 2 illustrates an exemplary star gear system, in accordance with various embodiments;
FIG. 3 illustrates a schematic diagram of a lubrication circulation system having a separate scavenge pump for the fan-drive gear system, in accordance with various embodiments; and
FIG. 4 illustrates a schematic diagram of a lubrication circulation system having a separate scavenge pump for the fan-drive gear system, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and the teachings herein. Thus, the detailed description herein is presented for purposes of illustration only and not limitation. The steps recited in any of the method or process descriptions may be executed in any order and are not necessarily limited to the order presented.

Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

As used herein, "aft" refers to the direction associated with the tail (e.g., the back end) of an aircraft, or generally, to the direction of exhaust of the gas turbine. As used herein, "forward" refers to the direction associated with the nose (e.g., the front end) of an aircraft, or generally, to the direction of flight or motion.

As used herein, "distal" refers to the direction radially outward, or generally, away from the axis of rotation of a turbine engine. As used herein, "proximal" refers to a direction radially inward, or generally, towards the axis of rotation of a turbine engine.

Gas turbine engines may use oil for cooling and lubrication. Engines having a fan section driven by separate gearing may further use oil to cool and lubricate the fan gearing. Oil systems with a separate scavenge pump for the fan gearing may reduce the volume of the main oil pump and some oil lines. Thus, the lubrication circulation system may by fit into smaller volumes within the engine and have a lighter weight.

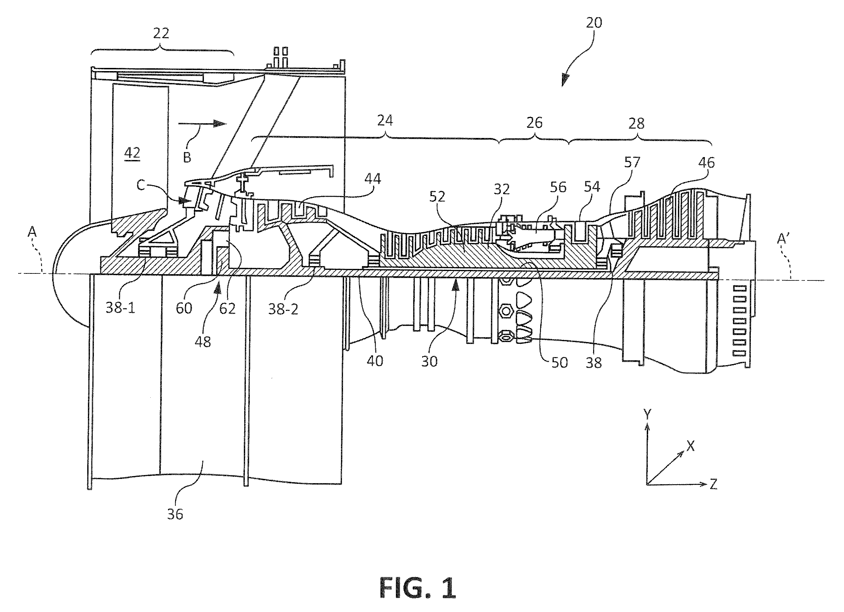

In various embodiments and with reference to FIG. 1, a gas turbine engine 20 is provided. Gas turbine engine 20 may be a two-spool turbofan that generally incorporates a fan section 22, a compressor section 24, a combustor section 26 and a turbine section 28. Alternative engines may include, for example, an augmentor section among other systems or features. In operation, fan section 22 can drive air along a bypass flow-path B while compressor section 24 can drive air along a core flow-path C for compression and communication into combustor section 26 then expansion through turbine section 28. Although depicted as a turbofan gas turbine engine 20 herein, it should be understood that the concepts described herein are not limited to use with turbofans as the teachings may be applied to other types of turbine engines including three-spool architectures.

Gas turbine engine 20 may generally comprise a low speed spool 30 and a high speed spool 32 mounted for rotation about an engine central longitudinal axis A-A' relative to an engine static structure 36 via several bearing systems 38, 38-1, and 38-2. It should be understood that various bearing systems 38 at various locations may alternatively or additionally be provided, including for example, bearing system 38, bearing system 38-1, and bearing system 38-2.

Low speed spool 30 may generally comprise an inner shaft 40 that interconnects a fan 42, a low pressure (or first) compressor section 44 and a low pressure (or first) turbine section 46. Inner shaft 40 may be connected to fan 42 through a geared architecture 48 that can drive fan 42 at a lower speed than low speed spool 30. Geared architecture 48 may comprise a gear assembly 60 enclosed within a gear housing 62. Gear assembly 60 couples inner shaft 40 to a rotating fan structure. High speed spool 32 may comprise an outer shaft 50 that interconnects a high pressure (or second) compressor 52 and high pressure (or second) turbine 54. A combustor 56 may be located between high pressure compressor 52 and high pressure turbine 54. A mid-turbine frame 57 of engine static structure 36 may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The core airflow C may be compressed by low pressure compressor section 44 then high pressure compressor 52, mixed and burned with fuel in combustor 56, then expanded over high pressure turbine 54 and low pressure turbine 46. Turbines 46, 54 rotationally drive the respective low speed spool 30 and high speed spool 32 in response to the expansion.

Gas turbine engine 20 may be, for example, a high-bypass ratio geared aircraft engine. In various embodiments, the bypass ratio of gas turbine engine 20 may be greater than about six (6). In various embodiments, the bypass ratio of gas turbine engine 20 may be greater than ten (10). In various embodiments, geared architecture 48 may be an epicyclic gear train, such as a star gear system (sun gear in meshing engagement with a plurality of star gears supported by a carrier and in meshing engagement with a ring gear) or other gear system. Geared architecture 48 may have a gear reduction ratio of greater than about 2.3 and low pressure turbine 46 may have a pressure ratio that is greater than about five (5). It should be understood, however, that the above parameters are exemplary of various embodiments of a suitable geared architecture engine and that the present disclosure contemplates other turbine engines.

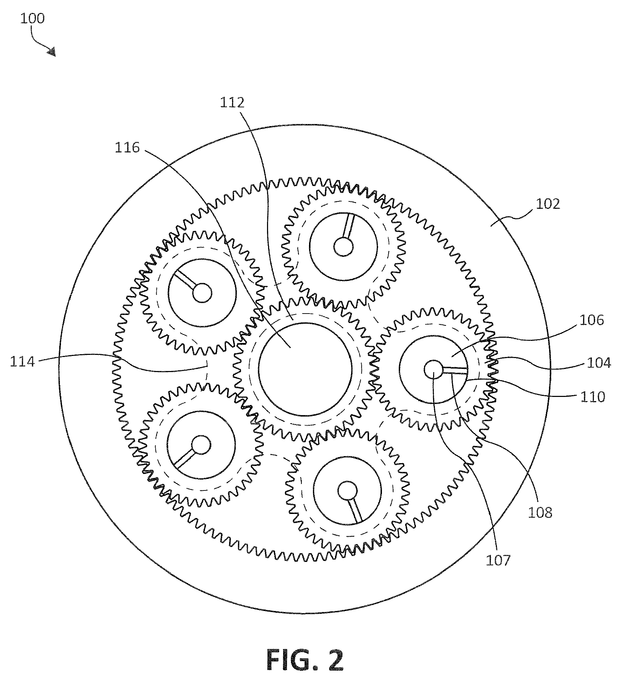

With reference to FIG. 2, an epicyclic gear system 100, which is a view of geared architecture 48 of FIG. 1, is shown. The epicyclic gear system 100 comprises an annular gear 102. Annular gear 102 has teeth facing radially inward to interface with star gears 104. Star gears 104 may be disposed radially inward from annular gear 102 and may comprise teeth around an outer diameter of star gears 104. Star gears 104 may comprise a journal pin 106 central to star gears 104. In that regard, star gear 104 may be a journal housing that forms a journal bearing for star gear 104 rotating relative to journal pin 106. Oil may be delivered through internal bore 107 of journal pin 106. The oil may pass through passage 108 to form a thin oil film 110 between journal pin 106 and star gear 104, generally following the circumference of journal pin 106. Star gear 104 may rotate about journal pin 106 with a thin oil film 110 filling a space between journal pin 106 and star gear 104 to provide lubrication.

In various embodiments, star gears 104 may be coupled to carrier 114. Carrier 114 is ghosted in FIG. 2 to provide greater detail of features behind carrier 114. A sun gear 112 may be central to epicyclic gear system 100. Sun gear 112 may be fixed to shaft 116 extending axially from the center of annular gear 102 and the center of sun gear 112.

In various embodiments, journal pin 106 may be fixed in place relative to a reference point outside the epicyclic gear system (such as an engine) by carrier 114, and both sun gear 112 and annular gear 102 may rotate. In that regard, shaft 116 and annular gear 102 may provide an input and output to epicyclic gear system 100. In various embodiments, star gears 104 may also move about sun gear 112 (star gear 104 may be referred to as a planet gear in this configuration) and either annular gear 102 or sun gear 112 may be fixed in place. In that regard, carrier 114 and the unfixed gear of sun gear 112 and annular gear 102 may provide an input and output to epicyclic gear system 100.

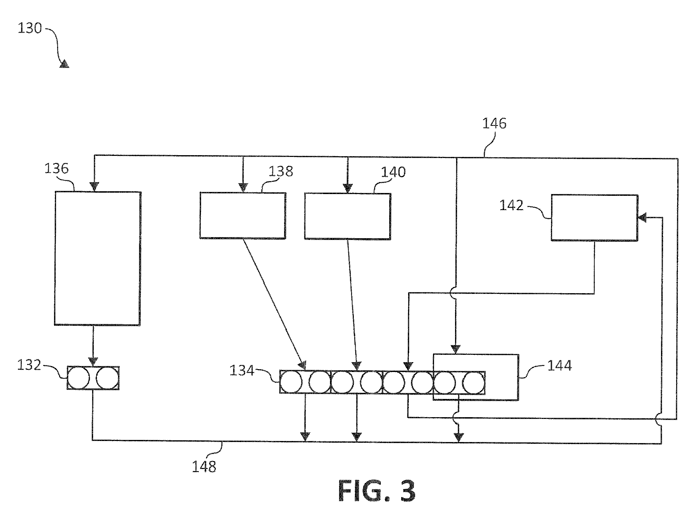

With reference to FIG. 3, a lubrication circulation system 130 for a fan-drive gear system (e.g., to form thin oil film 110 as illustrated in FIG. 2 and lubricate other fan-drive bearings) is shown, in accordance with various embodiments. Lubrication circulation system 130 may comprise fan-drive oil pump 132 located separately from main oil pump 134. Fan-drive oil pump 132 may be located in a separate compartment from main oil pump 134 in closer proximity to the fan-drive gear system. Fan-drive oil pump 132 may be disposed outside of fan-drive gear system (FDGS) compartment 136 and fluidly coupled to the FDGS by scavenge lines 148. Main oil pump 134 may be driven by gearbox 144. Fan-drive oil pump 132 may be driven by the FDGS, by a shaft from the main oil pump 134, or a shaft from the main gearbox 144 or angle gearbox. First bearing compartment 138 and second bearing compartment 140 may be fluidly coupled to main oil pump 134.

In various embodiments, oil exiting first bearing compartment 138 and second bearing compartment 140 may pass through scavenge lines 148 to main oil pump 134. Scavenge lines 148 may direct oil into oil tank 142. Supply lines 146 may carry oil from oil tank 142 to main oil pump 134. Supply lines 146 may then direct oil into FDGS compartment 136, first bearing compartment 138, and second bearing compartment 140.

In various embodiments, lubrication circulation system 130 may reduce the volume occupied by main oil pump 134 by separating fan-drive oil pump 132 from main oil pump 134. Fan-drive oil pump 132 may thus be located in closer proximity to the FDSG than main oil pump 134. The close proximity may further reduce weight and volume occupied by the lubrication circulation system 130 by enabling the use of smaller lines, both in diameter and in length, to and from the fan-drive oil pump 132. Fan-drive oil pump 162 may be a line replaceable unit.

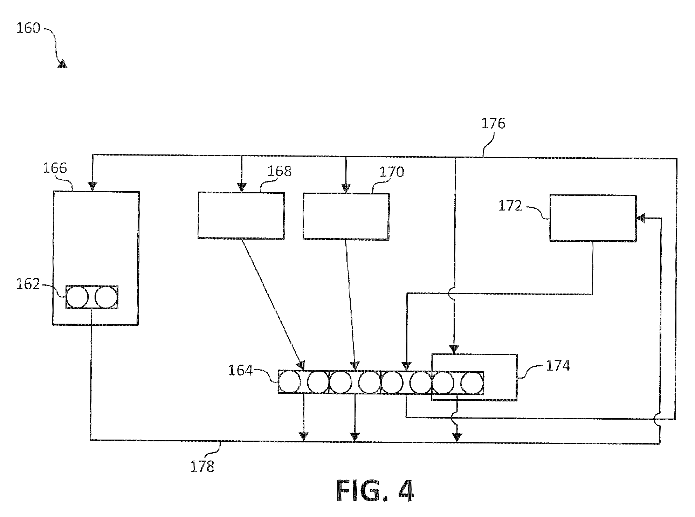

With reference to FIG. 4, a lubrication circulation system 160 for a FDGS (e.g., to lubricate epicyclic gear system 100 as illustrated in FIG. 2) is shown, in accordance with various embodiments. Lubrication circulation system 160 may comprise fan-drive oil pump 162 located separately from main oil pump 164. Main oil pump 164 may be driven by gearbox 174. Fan-drive oil pump 162 may be driven by the FDGS, by a shaft from the main oil pump 164, or a shaft from the main gearbox 174 or an angled gearbox.

In various embodiments, fan-drive oil pump 162 may be located in a separate compartment from main oil pump 164 in closer proximity than the main oil pump 164 to the FDGS. Fan-drive oil pump 162 may be disposed inside FDGS compartment 166 and fluidly coupled to the FDGS by scavenge lines 178. First bearing compartment 168 and second bearing compartment 170 may be fluidly coupled to main oil pump 164. Oil exiting first bearing compartment 168 and second bearing compartment 170 may pass through scavenge lines 178 to main oil pump 164. Scavenge lines 178 may direct oil into oil tank 172. Supply lines 176 may carry oil from oil tank 172 to main oil pump 164. Supply lines 176 may then direct oil into FDGS compartment 166, first bearing compartment 168, and second bearing compartment 170.

In various embodiments, lubrication circulation system 160 may reduce the volume occupied by main oil pump 134 by separating fan-drive oil pump 162 and locating fan-drive oil pump 162 within FDGS compartment 166. Fan-drive oil pump 162 may thus be in close proximity to the FDSG and thereby enabling the use of smaller lines, both in diameter and in length, to and from the fan-drive oil pump 162. For example, the diameter of scavenge lines 178 may be reduced to less than 2 inches (5.08 cm) in various embodiments. Thus, fan-drive oil pump 162 separately located within FDGS compartment 166 may reduce the volume occupied by lubrication circulation system 160 and enable fan-drive oil pump 162 to be a line replaceable unit.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. A lubrication circulation system (130;160), comprising:
a first oil pump (134;164) configured to retrieve oil from a bearing compartment (138,140;168,170); and
a second oil pump (132;162) located separate from the first oil pump (134;164) and configured to retrieve the oil from a fan-drive gear system compartment (136;166), wherein the first oil pump (134;164) is configured to provide the oil to the bearing compartment (138,140;168,170) and the fan-drive gear system compartment (136;166).

2. The lubrication circulation system of claim 1, further comprising an epicyclic gear system (100) in the fan-drive gear system compartment (136;166), wherein the second oil pump (132;162) is configured to retrieve the oil from the epicyclic gear system (100).

3. A gas turbine engine (20), comprising:
an epicyclic gear system (100);
a fan (42) mechanically coupled to the epicyclic gear system (100) and configured to rotate about an axis (A-A);
a compressor (44) aft of the fan (42) and mechanically coupled to the fan (42), the compressor (44) comprising a bearing compartment (138,140;168,170);
a first oil pump (134;164) configured to provide oil to the bearing compartment (138,140;168,170); and
a second oil pump (132;162) configured to retrieve the oil from the epicyclic gear system (100), wherein the second oil pump (132;162) is located in a compartment separate from the first oil pump (134;164).

4. The gas turbine engine of claim 3, further comprising a fan-drive gear system compartment (136;166) containing the epicyclic gear system (100).

5. The lubrication circulation system of claim 1 or 2 or the gas turbine engine of claim 4, wherein the second oil pump (132;162) is located in the fan-drive gear system compartment (136;166).

6. The lubrication circulation system or gas turbine engine of any preceding claim, further comprising a scavenge line (148;178) fluidly coupled to the fan-drive gear system compartment (136;166)/epicyclic gear system (100) and the second oil pump (132;162).

7. The lubrication circulation system or gas turbine engine of claim 6, wherein the scavenge line (148;178) comprises a diameter less than 2 inches (5.08 cm).

8. The lubrication circulation system or gas turbine engine of any preceding claim, further comprising an oil tank (142; 172), wherein the second oil pump (132;162) and the first oil pump (134;164) urge the oil to the oil tank (142;172).

9. The lubrication circulation system or gas turbine engine of claim 8, wherein the first oil pump (134;164) is configured to pump the oil from the oil tank (142; 172) into the bearing compartment (138,140;168,170) and the fan-drive gear system compartment (136;166)/epicyclic gear system (100).

10. The lubrication circulation system or gas turbine engine of any preceding claim, wherein the second oil pump (132;162) is located closer to the fan-drive gear system compartment (136;166)/epicyclic gear system (100) than the first oil pump (134;164).

11. A lubrication circulation system, comprising:
a first oil pump (134;164) configured to retrieve oil from a bearing compartment (138,140;168,170);
a second oil pump (132;162) configured to retrieve the oil from a fan-drive gear system compartment (136;166), wherein the first oil pump (134;164) is configured to provide the oil to the bearing compartment (138,140;168,170) and the fan-drive gear system compartment (136;166);
an epicyclic gear system (100) in the fan-drive gear system compartment (136;166), wherein the second oil pump (132;162) is configured to retrieve the oil from the epicyclic gear system (100); and
a scavenge line (148;178) fluidly coupled to the fan-drive gear system compartment (136;166) and the second oil pump (132;162).

12. The lubrication circulation system of claim 11, wherein the second oil pump (132;162) is located in the fan-drive gear system compartment (136;166).

13. The lubrication circulation system of claim 11 or 12, wherein the second oil pump (132;162) is located closer to the fan-drive gear system compartment (136;166) than the first oil pump (134;164).

14. The lubrication circulation system of claim 11, 12 or 13, wherein the scavenge line (148;178) comprises a diameter less than 2 inches (5.08 cm).
